# EUROPÄISCHE PATENTSCHRIFT

(11) **EP 2 453 559 B1**
(45) Veröffentlichungstag und Bekanntmachung des Hinweises auf die Patenterteilung: **25.08.2021**
(21) Anmeldenummer: 11188272.6
(22) Anmeldetag: 08.11.2011
(51) Int. Cl.: H02K 5/22, F04D 13/06, F04D 15/00, F04D 29/42, H02K 5/10, H02K 11/33, H02K 11/00

(54) **Gehäusekappeneinrichtung und Gehäuse für eine Zirkulationspumpe**
Casing cap and housing for a circulation pump
Couvercle de boitier et boitier d`une pompe à circulation

(30) Priorität: 11.11.2010 DE 102010051918
(43) Veröffentlichungstag der Anmeldung: 16.05.2012
(73) Patentinhaber: Deutsche Vortex GmbH & Co. KG, 71642 Ludwigsburg (DE)
(72) Erfinder: Blaser, Georg, 71679 Asperg (DE); Brösamle, Pino, 71679 Asperg (DE)
(74) Vertreter: Patentanwälte Vollmann Hemmer Lindfeld Partnerschaft mbB

(56) Entgegenhaltungen:
- EP-A1- 1 947 347
- EP-A2- 1 104 079
- WO-A1-98/35424
- DE-A1- 2 540 110
- None

## Beschreibung

Die Erfindung betrifft eine Gehäusekappeneinrichtung für eine Zirkulationspumpe einer Warmwasserversorgung. Die Erfindung betrifft weiter ein Gehäuse umfassend mindestens ein an einem Pumpengehäuse anbringbares Grundgehäuse, in welchem ein Elektromotor der Zirkulationspumpe aufnehmbar ist, und eine mit dem Grundgehäuse verbindbare Gehäusekappeneinrichtung.

Ein Gehäuse für eine Zirkulationspumpe ist beispielsweise aus DE 10 2007 042 186 A1 bekannt. Dabei ist ein Elektromotor mit einem Motorengehäuse in einem als Mantel gestalteten Gehäuseteil angeordnet. Ein Anbringen des Motorengehäuses an einem Pumpengehäuse erfolgt mittels einer Überwurfmutter. An einem dem Pumpengehäuse abgewandten Ende des Motorengehäuses ist eine Schaltungsanordnung einschließlich einer Versorgungseinrichtung für den Motor angeordnet. Die Schaltungsordnung ist über eine mit dem Mantel verschraubbare Gehäusekappe abdeckbar. Die Energieversorgung zu dem Elektromotor erfolgt über eine elektrische Leitung, welche bei abgenommener Gehäusekappe an die Schaltungsanordnung für den Motor anschließbar ist. Ein Anschließen erfolgt beispielsweise mittels Lüsterklemmen. Nach dem elektrischen Anschluss wird die Gehäusekappe mit dem als Mantel gestalteten Gehäuseteil verbunden.

In EP 1 104 079 A2 wird ein Elektromotor für eine Kreiselpumpe beschrieben. Der Elektromotor weist ein Motorgehäuse auf, das in einem kappenförmigen Klemmenkasten angeordnet ist und mittels bolzenförmiger Elemente mit dem Klemmenkasten verbindbar ist. Eine Leistungselektronik (Versorgungseinrichtung) für den Elektromotor ist in dem Klemmenkasten angeordnet. Ein Wandbereich des Klemmenkastens weist Durchbrechungen auf, durch welche sich Anschlussstifte zum elektrischen Anschluss der Statorwicklung des Elektromotors erstrecken. Der Klemmenkasten weist weiter Kabelanschlussstutzen auf, durch welche elektrische Anschlusskabel durchgeführt werden.

Klemmenkästen sind auch aus WO 98/35424 A1 und DE 25 40 110 A1 bekannt.

Es ist eine Aufgabe der vorliegenden Erfindung, eine Gehäusekappeneinrichtung und ein Gehäuse zu schaffen, welche eine vereinfachte Montage ermöglichen.

Diese Aufgabe wird gelöst durch die Gegenstände mit den Merkmalen der Ansprüche 1 und 13. Weitere Vorteile der Erfindung ergeben sich aus den Unteransprüchen.

Gemäß einem ersten Aspekt der Erfindung wird eine Gehäusekappeneinrichtung für eine Zirkulationspumpe einer Warmwasserversorgung mit einem Grundgehäuse und einem in dem Grundgehäuse gelagerten Elektromotor geschaffen, die Gehäusekappeneinrichtung umfassend eine Gehäusekappe mit wenigstens einem Verbindungselement für eine Verbindung mit dem Grundgehäuse und eine in der Gehäusekappe angeordnete Versorgungseinrichtung für den Elektromotor, wobei wenigstens eine in einem Innenraum der Gehäusekappe angeordnete Trennwand vorgesehen ist, welche den Innenraum der Gehäusekappe in einen abgetrennten Aufnahmeraum mit einer Befestigungseinrichtung, die die Versorgungseinrichtung aufnimmt, und einen Anschlussraum mit wenigstens einer mit der Versorgungseinrichtung verbundenen Anschlusseinrichtung für eine Versorgungsleitung unterteilt, wobei die Versorgungseinrichtung eine in dem Aufnahmeraum gelagerte Platine aufweist, wobei die Platine die wenigstens eine Trennwand durchdringt und in dem Anschlussraum angeordnete Kontaktelemente zur elektrischen Verbindung mit dem Elektromotor aufweist, und wobei die Versorgungseinrichtung mit wenigstens einem besagtem in dem Anschlussraum angeordneten Kontaktelement zur elektrischen Verbindung mit dem Elektromotor wirkverbunden ist.

Als Versorgungseinrichtung wird im Zusammenhang mit der Erfindung eine Einrichtung bezeichnet, die eine Versorgungsspannung für den Elektromotor erzeugt oder eine Sekundärspannung aus einer Primärquelle ableitet. Die Versorgungseinrichtung umfasst zu diesem Zweck geeignete elektronische Elemente, welche in einem gemeinsamen Bauteil oder in mehreren Bauteilen realisiert sind. Die Versorgungseinrichtung umfasst in einer Ausgestaltung auch eine Motorsteuerung. In anderen Ausgestaltungen ist die Motorsteuerung an dem Elektromotor angeordnet und mit der Versorgungseinrichtung elektrisch gekoppelt.

Durch Aufnahme der Versorgungseinrichtung in der Gehäusekappe wird eine in der Montage einfach handhabbare Baueinheit geschaffen. Zudem ist dabei mittels der Gehäusekappe eine Anpassung an unterschiedliche Netzformen und/oder Netzspannungen möglich. Durch den Aufnahmeraum wird ein unerwünschter Zugriff auf die Versorgungseinrichtung verhindert.

Die Versorgungseinrichtung ist in einer Ausgestaltung im Wesentlichen ortsfest in dem Aufnahmeraum mittels der Befestigungseinrichtung aufnehmbar. Kleine Bewegungen der Versorgungseinrichtungen sind bei einer derartigen Ausgestaltung aufgrund von Toleranzen in der Befestigung möglich. In anderen Ausgestaltungen ist die Befestigungseinrichtung derart gestaltet, dass eine Bewegung mit einem oder mehreren Freiheitsgraden für einen Toleranzausgleich in der Montage möglich ist. Als "Befestigungseinrichtung" wird im Zusammenhang mit der Erfindung jegliche Form der Anbringung bezeichnet. In einer Ausgestaltung ist die Befestigungseinrichtung als Fläche gestaltet, mit welcher eine Versorgungseinrichtung stoffschlüssig verbindbar, insbesondere verklebbar ist. In anderen Ausgestaltungen umfasst die Befestigungseinrichtung Rast- und/oder Klemmelemente für die Versorgungseinrichtung oder Teile der Versorgungseinrichtung. In wieder anderen Ausgestaltungen sind Schraubkanäle vorgesehen, an welchen eine Anbringung der Versorgungseinrichtung mittels Schraubverbindung möglich ist.

Der Aufnahmeraum ist durch die Trennwand und wenigstens eine Wandung des Gehäuses definiert. Durch die Trennwand wird ein abgeschlossener Aufnahmeraum für die Versorgungseinrichtung geschaffen. Als abgeschlossener Raum wird im Zusammenhang mit der Erfindung ein Raum bezeichnet, welcher mittels Wandungen o.dgl. ganz oder teilweise gegenüber einer Umgebung abgetrennt ist. Eine Abtrennung ist dabei zumindest derart gestaltet, dass ein Zugriff in den Aufnahmeraum und damit auf eine in dem Aufnahmeraum angeordnete Versorgungseinrichtung verwehrt ist. In einigen Ausgestaltungen ist eine wasserdichte Abtrennung des Aufnahmeraums vorgesehen, wobei ein Schutzgrad je nach Anforderung realisiert ist. In einer Ausgestaltung sind zu diesem Zweck Dichtelemente vorgesehen, durch welche der Aufnahmeraum verschlossen wird. In anderen Ausgestaltungen verbleibt zwischen der Wandung und der Trennwand zumindest abschnittsweise ein Spalt. Eine in dem abgeschlossenen Aufnahmeraum angeordnete Versorgungseinrichtung ist zumindest vor einem versehentlichen Zugriff durch unbefugte Personen geschützt. In einer Ausgestaltung ist die Trennwand mit der Gehäusekappe verrastet. Die Rastung ist dabei in einer Ausgestaltung lösbar. In anderen Ausgestaltungen ist es vorgesehen, den Aufnahmeraum mittels der Trennwand dauerhaft zu verschließen, wobei ein Zugriff nur durch Zerstörung der Trennwand, der Wandung und/oder von Rastelementen möglich ist. Alternativ oder zusätzlich ist die Trennwand stoffschlüssig mit der Gehäusekappe verbunden.

Die Versorgungseinrichtung umfasst je nach Gestaltung des Elektromotors Transformatoren, Kondensatoren und dergleichen. Die Versorgung mit elektrischer Energie erfolgt über eine elektrische Leitung, auch als Versorgungsleitung oder Versorgungskabel bezeichnet. In vorteilhaften Ausgestaltungen wird die Versorgungseinrichtung über die Netzspannung gespeist. Sofern der Elektromotor als Gleichstrommotor ausgebildet ist, umfasst die Versorgungseinrichtung bei einer derartigen Ausgestaltung Bauteile für eine Spannungstransformation.

Als Anschlussraum wird im Zusammenhang mit der Anmeldung ein Bereich bezeichnet, welcher wenigstens Anschlüsse oder Kontakte zur elektrischen Kopplung der Versorgungseinrichtung mit einer Versorgungsleitung aufweist. Die Versorgungseinrichtung ist vorzugsweise derart gestaltet, dass mittels der Versorgungseinrichtung eine Sekundärspannung aus einer Primärquelle, insbesondere einer Netzspannung abgeleitet wird. Anschlüsse zur elektrischen Kopplung der Versorgungseinrichtung mit der Primärquelle sind dabei in dem Anschlussraum vorgesehen. Der Anschluss einer Versorgungsleitung an die Versorgungseinrichtung ist dabei ohne Zugriff auf den Aufnahmeraum möglich. Der in dem Anschlussraum vorgesehene Anschluss ist elektrisch mit der Versorgungseinrichtung gekoppelt.

Ein Anschließen des Elektromotors an eine Energieversorgung ist auf einfache Weise über die Kontaktelemente realisiert. Aufwendige Anschlussarbeiten bei der Montage sind so vermeidbar.

In vorteilhaften Ausgestaltungen sind die Kontaktelemente als Steckkontakte oder Buchsen für eine elektrische Steckverbindung mit dem Elektromotor ausgebildet. Die elektrische Kopplung erfolgt dabei über zueinander komplementäre Kontaktstifte oder Steckkontakte und Kontaktbuchsen. Durch die erfindungsgemäße Befestigungseinrichtung für die Versorgungseinrichtung in dem Aufnahmeraum ist ein positioniertes Halten der Versorgungseinrichtung in der Gehäusekappe gegeben, sodass ein zur Herstellung der Steckverbindung mit dem Elektromotor ausreichender Gegendruck über die Außenseite der Gehäusekappe in der Montage aufgebracht werden kann.

Die Kontaktelemente sind vorzugsweise als Platinenstecker oder Randstecker an einem Randbereich der Platine gebildet, wobei die Platine mittels des Platinensteckers in eine mit dem Elektromotor verbundene Kontaktleiste einsteckbar ist. In einer Ausgestaltung erfolgt dabei ein Einstecken der Platine in die Kontaktleiste derart, dass nur eine elektrische Verbindung über die Platine und die Kontaktleiste realisiert ist, wobei eine mechanische Kopplung der Bauteile separat erfolgt. In anderen Ausgestaltungen dient eine Steckverbindung zwischen Platine und Kontaktleiste einer mechanischen und einer elektrischen Kopplung. Eine Befestigung der Platine in der Gehäusekappe ist in einer Ausgestaltung durch Rastelemente realisiert. In anderen Ausgestaltungen ist die Platine mit der Gehäusekappe verschraubt und/oder verklebt. Die Gehäusekappe weist alternativ oder zusätzlich einen Steckplatz für die Platine auf. In wieder einer anderen Ausgestaltung ist die Platine mittels Kraftelementen, insbesondere Federelementen in der Gehäusekappe gelagert, wobei die Kraftelemente die Kontaktelemente der Platine nach der Montage in Kontakt mit den zugehörigen Kontaktelementen des Elektromotors zwingen.

In vorteilhaften Ausgestaltungen ist die wenigstens eine Trennwand wenigstens abschnittsweise schräg zu einer dem Grundgehäuse zugewandten Stirnseite der Gehäusekappe angeordnet. Durch eine schräge Anordnung der Trennwand werden eine Größe des Anschlussraums und des Aufnahmeraums optimiert, wobei gleichzeitig eine Höhe der Gehäusekappe gering gehalten wird.

Für eine Speisung mittels Netzspannung ist eine elektrische Leitung über eine Öffnung in der Gehäusewandung und/oder eine Aussparung an einem Rand der Gehäusewandung in den Innenraum der Gehäusekappe, genauer in den Anschlussraum, führbar. Die Gehäusekappe weist in einer Ausgestaltung an einer an den Anschlussraum angrenzenden Wandung mindestens eine Kabeltülle für die Versorgungsleitung auf. Die Kabeltülle ist in vorteilhaften Ausgestaltungen einteilig mit der Gehäusekappe ausgeformt. In einer Ausgestaltung sind die Gehäusekappe und/oder die Kabeltülle aus Kunststoff gefertigt, beispielsweise mittels Spritzgießen oder dergleichen. Vorzugsweise ragt die Kabeltülle nach außen von der Wandung der Gehäusekappe ab. In vorteilhaften Ausgestaltungen ist eine Kabeltülle mit Zugentlastung vorgesehen.

In einer Weiterbildung der Erfindung ist vorgesehen, dass die Kabeltülle wenigstens ein Federelement für eine Kabelklemmung und einen Gewindebereich für eine Befestigungsmutter aufweist. Die Federelemente sind vorzugsweise an den Enden der Kabeltülle ausgeformt. Mittels der Federelemente ist eine Klemmung der Leitung für eine Zugentlastung im Anschlussbereich an die Versorgungseinrichtung möglich. Durch Anziehen der Gewindemutter ist dabei eine Klemmung der Leitung realisierbar.

Die elektrische Leitung oder Versorgungsleitung ist über die Kabeltülle in die Gehäusekappe einführbar und im Inneren der Gehäusekappe mittels der wenigstens einen Anschlusseinrichtung mit der Versorgungseinrichtung koppelbar.

In einer vorteilhaften Weiterbildung der Erfindung ist die wenigstens eine Anschlusseinrichtung für die Versorgungseinrichtung als Kontaktklemme gestaltetet. Als Kontaktklemme wird eine Anschlusseinrichtung bezeichnet, welche eine mechanische Fixierung einer elektrischen Leitung mittels einer Schraubverbindung und/oder einer Rastfeder in einem leitfähigen Anschlusskörper vorsieht. Die Kontaktklemme ist in einer Ausgestaltung als Lüsterklemme zwischen elektrischer Leitung und Versorgungseinrichtung mit einer Schraubklemmung für die elektrische Leitung gestaltet. In anderen Ausgestaltungen ist eine sogenannte Federklemme vorgesehen.

In vorteilhaften Ausgestaltungen ist die Kontaktklemme als Federklemme gestaltet und weist mindestens einen zum Öffnen entgegen einer Kraft einer Rückstellfeder bewegbaren Hebel auf. Der Hebel ist dabei vorzugsweise derart angeordnet, dass eine ergonomische Bedienbarkeit mit einer Hand möglich ist, wobei mittels der zweiten Hand die Leitung in die Kontaktklemme einführbar ist. In typischen Ausgestaltungen erfolgt eine Speisung über die Netzspannung, wobei die elektrische Leitung mindestens zwei Leiter umfasst. Die zwei Leiter werden vorzugsweise jeweils über eine eigene Kontaktklemme aufgenommen. Die Hebel für eine Betätigung der Kontaktklemmen sind dabei in vorteilhaften Ausgestaltungen gekoppelt und/oder gemeinsam ausgebildet, sodass eine gleichzeitige Betätigung möglich ist. In einigen Ausgestaltungen ist zusätzlich eine Kontaktklemme für einen Schutzleiter vorgesehen.

In einer Ausgestaltung ist vorgesehen, dass die Versorgungseinrichtung eine Trimmeinrichtung zur Einstellung einer abgegebenen Versorgungsspannung umfasst, wobei die Trimmeinrichtung vorzugsweise über den Anschlussraum zugänglich ist. Über die Versorgungsspannung für den Elektromotor ist eine Drehzahl des Elektromotors und damit ein Förderdruck einer zugehörigen Zirkulationspumpe regulierbar. Bei einem abgeschlossenen Aufnahmeraum ist dabei in einer Ausgestaltung ein Stellelement außerhalb des Aufnahmeraums angeordnet. Das Stellelement ist in einer Ausgestaltung mechanisch, insbesondere mittels einer Welle, mit der im Aufnahmeraum angeordneten Versorgungseinrichtung verbunden.

In einer weiteren Ausgestaltung umfasst die Versorgungseinrichtung eine Schaltungsanordnung zur bedarfsabhängigen Energieversorgung des Elektromotors. Die Schaltungsanordnung ist in einer Ausgestaltung mit mindestens einem thermischen Sensor gekoppelt. Der mindestens eine thermische Sensor erfasst in vorteilhaften Ausgestaltungen die Temperatur des Rücklaufs und/oder des Vorlaufs einer Zirkulationsleitung der Warmwasserversorgung. Eine Signalübertragung an die Schaltungsanordnung erfolgt in einer Ausgestaltung kabellos, beispielsweise über Funk. In anderen Ausgestaltungen sind Leitungen vorgesehen, welche den Sensor oder die Sensoren mit der Schaltungsanordnung koppeln. Die Kopplung der Leitung mit der Schaltungsanordnung erfolgt in einer Ausgestaltung mittels Steckkontakten. In anderen Ausgestaltungen ist eine feste Verbindung, beispielsweise eine Lötverbindung, vorgesehen. Alternativ oder zusätzlich ist in einer weiteren Ausgestaltung vorgesehen, dass die Schaltungsanordnung einen Zeitgeber umfasst. Der Zeitgeber ermöglicht ein zeitgetriggertes Ein- und/oder Ausschalten des Elektromotors und damit der Pumpe für die Warmwasserversorgung. Die Schaltungsanordnung umfasst weiter in einer Ausgestaltung eine Elektronik, welche eine Adaption an ein Nutzungsverhalten eines Nutzers der Zirkulationspumpe ermöglicht. In anderen Ausgestaltungen sind Schaltelemente für eine Urlaubseinstellung, Komforteinstellungen oder dergleichen vorgesehen. Eine Betätigung der Schaltungsanordnung erfolgt in einer Ausgestaltung per Fernsteuerung mittels Funkverbindung.

In einer Weiterbildung der Erfindung sind an der Gehäusekappe, vorzugsweise im Bereich eines Deckels, Tastelemente zur Betätigung der Schaltungsanordnung vorgesehen. Alternativ oder zusätzlich weist die Gehäusekappe Durchbrüche und/oder transparente Abschnitte für optische Signale auf. Durch die optischen Signale sind vorgenommene Einstellungen dem Nutzer auf einfache Weise signalisierbar.

Für die Schaltungsanordnung ist in einer Ausgestaltung eine separate Platine vorgesehen. In anderen Ausgestaltungen ist eine gemeinsame Platine für alle Bauteile vorgesehen. Die Platine ist dabei vor einer Montage entsprechend einer Anwendung geeignet bestückbar.

Die Aufgabe wird weiter gelöst durch ein Gehäuse für eine Zirkulationspumpe umfassend eine Gehäusekappeneinrichtung und mindestens ein erstes, an einem Pumpengehäuse anbringbares Grundgehäuse, in welchem ein Elektromotor der Zirkulationspumpe aufnehmbar ist, wobei das Grundgehäuse und die Gehäusekappe zueinander komplementäre Kopplungselemente aufweisen, durch welche die Versorgungseinrichtung mit dem Elektromotor elektrisch koppelbar ist.

Die Gehäusekappe und/oder das Grundgehäuse weisen in vorteilhaften Ausgestaltungen Orientierungshilfen zum Verhindern einer falschen Montage auf.

Die Gehäusekappe und das Grundgehäuse sind miteinander verbindbar, wobei die Verbindungselemente vorzugsweise für eine zerstörungsfrei lösbare Verbindung gestaltet sind. Eine Verbindung der Gehäusekappe mit dem Grundgehäuse erfolgt in einer Ausgestaltung mittels Schraubverbindung. In einer anderen Ausgestaltung weisen die Gehäusekappe und das Grundgehäuse zueinander komplementäre Rastelemente auf. Dabei ist eine einfache, werkzeuglos realisierbare Verbindung geschaffen. Vorzugsweise weisen die Rastelemente und die Kontaktleiste für die Platine eine gemeinsame Montagerichtung auf. Dabei wird durch eine Relativbewegung der Gehäusekappe und des Grundgehäuses eine mechanische und elektrische Kopplung mit wenigen Handgriffen geschaffen.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet.

In den Zeichnungen zeigen:
- Fig. 1:: eine erste perspektivische Seitenansicht einer ersten Ausführungsform einer Gehäusekappeneinrichtung;
- Fig. 2:: eine zweite perspektivische Seitenansicht der ersten Ausführungsform gemäß Fig. 1;
- Fig. 3:: eine perspektivische Innenansicht der ersten Ausführungsform gemäß Fig. 1;
- Fig. 4:: eine Schnittansicht der ersten Ausführungsform gemäß Fig. 1;
- Fig. 5:: eine erste perspektivische Seitenansicht einer zweiten Ausführungsform einer Gehäusekappeneinrichtung;
- Fig. 6:: eine zweite perspektivische Seitenansicht der zweiten Ausführungsform gemäß Fig. 5;
- Fig. 7:: eine perspektivische Innenansicht der zweiten Ausführungsform gemäß Fig. 5;
- Fig. 8:: eine Schnittansicht der zweiten Ausführungsform gemäß Fig. 5 und
- Fig. 9:: eine Schnittansicht eines Gehäuses gemäß einer dritten Ausführungsform.

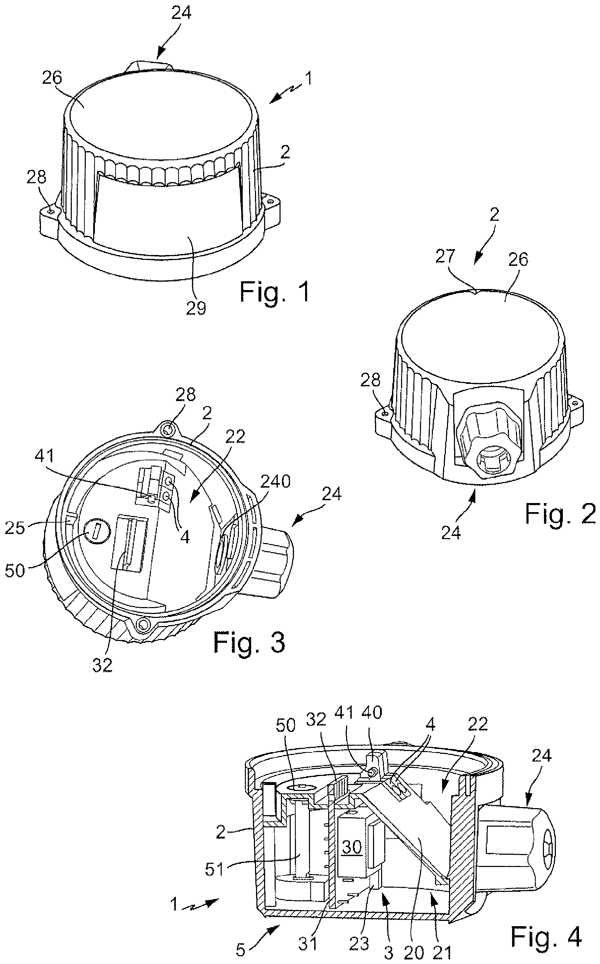

Fig. 1 bis 4 zeigen schematisch ein erstes Ausführungsbeispiel einer Gehäusekappeneinrichtung 1 in einer ersten perspektivischen Seitenansicht, einer zweiten perspektivischen Seitenansicht, einer perspektivischen Ansicht mit Blick auf einen Innenraum und einer Schnittdarstellung.

Die Gehäusekappeneinrichtung 1 umfasst eine Gehäusekappe 2 und eine Versorgungseinrichtung 3, welche in Fig. 1 bis 3 nicht sichtbar ist. Die Gehäusekappe 2 ist mit einem in den Fig. 1 bis 4 nicht dargestellten Grundgehäuse einer Zirkulationspumpe einer Warmwasserversorgung umfassend eine Elektromotor zerstörungsfrei lösbar verbindbar.

Wie in Fig. 4 erkennbar ist, umfasst die Gehäusekappe 2 eine Trennwand 20, welche einen Innenraum der Gehäusekappe in einen Aufnahmeraum 21 und einen Anschlussraum 22 unterteilt. Der Aufnahmeraum 21 ist als abgeschlossener Raum gestaltet, wobei die Trennwand 20 und Bereiche der Wandung der Gehäusekappe 2 den Aufnahmeraum 21 begrenzen. Die Versorgungseinrichtung 3 ist in dem Aufnahmeraum 21 eingehaust. Die Versorgungseinrichtung 3 ist so vor einem ungewünschten Zugriff geschützt.

Die Versorgungseinrichtung 3 umfasst Transformatoren, Kondensatoren und dergleichen, welche schematisch als Baugruppe 30 dargestellt sind. Die Baugruppe 30 ist auf einer Platine 31 angeordnet, welche in dem Aufnahmeraum 21 gelagert ist. In dem dargestellten Ausführungsbeispiel ist eine Leiste 23 vorgesehen, in welche die Platine 31 eingeführt ist und welche somit als Befestigungseinrichtung dient. Die Platine 31 ist mit Kontakten 32 versehen, welche zugehörige, in Fig. 1 bis 4 nicht dargestellten Kontaktelemente eines ebenfalls nicht dargestellten Elektromotors kontaktieren. Die Platine 31 ist derart angeordnet, dass sie die Trennwand 20 durchdringt, wobei die Kontakte 32 der Platine 31 in den Anschlussraum 22 ragen und der Abschnitt der Platine 31, auf welchem die Versorgungseinrichtung 3 angebracht ist, in dem Aufnahmeraum 21 angeordnet ist.

Eine Versorgung mit elektrischer Energie erfolgt über ein nicht dargestelltes Versorgungskabel mit zwei Leitern. Die Gehäusekappe 2 weist eine Kabeltülle 24 für das Versorgungskabel auf. Im Bereich der Kabeltülle 24 ist ein Dichtelement 240 eingesetzt. Das Versorgungskabel ist mit der Versorgungseinrichtung 3 verbindbar. Die Versorgungseinrichtung 3 ist zu diesem Zweck mit zwei als Kontaktklemmen 4 gestalteten Anschlüssen gekoppelt. Die Anschlüsse sind in dem Anschlussraum 22 angeordnet, sodass ein Anschließen des Versorgungskabels an die Versorgungseinrichtung 3 ohne Zugriff auf den Aufnahmeraum 21 möglich ist. In dem dargestellten Ausführungsbeispiel ist die Trennwand 20 wenigstens abschnittsweise schräg zu einer dem nicht dargestellten Grundgehäuse zugewandte Stirnseite der Gehäusekappe 2 angeordnet. Durch eine schräge Anordnung der Trennwand 20 werden eine Größe des Anschlussraums 22 und des Aufnahmeraums 21 optimiert. Die Wandung ist dabei derart angeordnet, dass ein über die Kabeltülle 24 eingeführtes Versorgungskabel in Richtung der dem nicht dargestellten Grundgehäuse zugewandte Stirnseite der Gehäusekappe 2 abgelenkt wird. Die Schräge der Trennwand dient dabei auch als Montagehilfe.

Die dargestellten Kontaktklemmen 4 sind als Federklemmen gestaltet, wobei jede Kontaktklemme 4 einen zum Öffnen entgegen einer Kraft einer nicht sichtbaren Rückstellfeder bewegbaren Hebel 40 aufweist. Die Hebel 40 sind in dem dargestellten Ausführungsbeispiel entlang ihrer Axialrichtung in Richtung der Kabeltülle 24 verschieblich. Die zwei Leiter des Versorgungskabels werden jeweils über eine eigene Kontaktklemme 4 aufgenommen. Die Hebel 40 für eine Betätigung der Kontaktklemmen 4 sind über eine Verbindungsstange 41 gekoppelt, sodass eine gleichzeitige Betätigung möglich ist.

Die dargestellte Versorgungseinrichtung 3 umfasst eine in Fig. 4 sichtbare Trimmeinrichtung 5 zur Einstellung einer abgegebenen Versorgungsspannung und damit einer Drehzahl für den Elektromotor. Die Trimmeinrichtung 5 weist einen im Anschlussraum 22 angeordneten Drehknopf 50 auf, wobei eine Stellung des Drehknopfs 50 über eine Trimmwelle 51 an die Versorgungseinrichtung 3 übertragen wird. Eine Regelung der Drehzahl des Elektromotors ist somit ebenfalls ohne Zugriff auf den Aufnahmeraum 21 möglich.

Die Gehäusekappe 2 weist weiter eine in Fig. 3 und 4 sichtbare, als Rippe gestaltete Orientierungshilfe 25 auf, welche eine Fehlmontage der Gehäusekappe 2 verhindert.

An einem Deckel 26 der Gehäusekappe 2 ist eine Fläche zur Anbringung eines Beschriftungsschilds, beispielsweise in Form eines Klebeschilds vorgesehen. Der Deckel 26 weist einen Vorsprung 27 auf, welcher als optische Orientierungshilfe dient.

Die Gehäusekappe 2 ist mit einem in Fig. 1 bis 4 nicht dargestellten Grundgehäuse, welches den Elektromotor aufnimmt, mechanisch und elektrisch verbindbar. In dem dargestellten Ausführungsbeispiel sind an der Gehäusekappe 2 seitlich abragende Ösen 28 für eine Schraubverbindung vorgesehen.

Wie am besten in Fig. 1 erkennbar ist, weist die dargestellte Gehäusekappe 2 eine Befestigungsfläche 29 für ein Typenschild oder dergleichen auf. Mit Ausnahme dieser Befestigungsfläche 29 ist die Wandung geriffelt für eine bessere Handhabung bei der Montage.

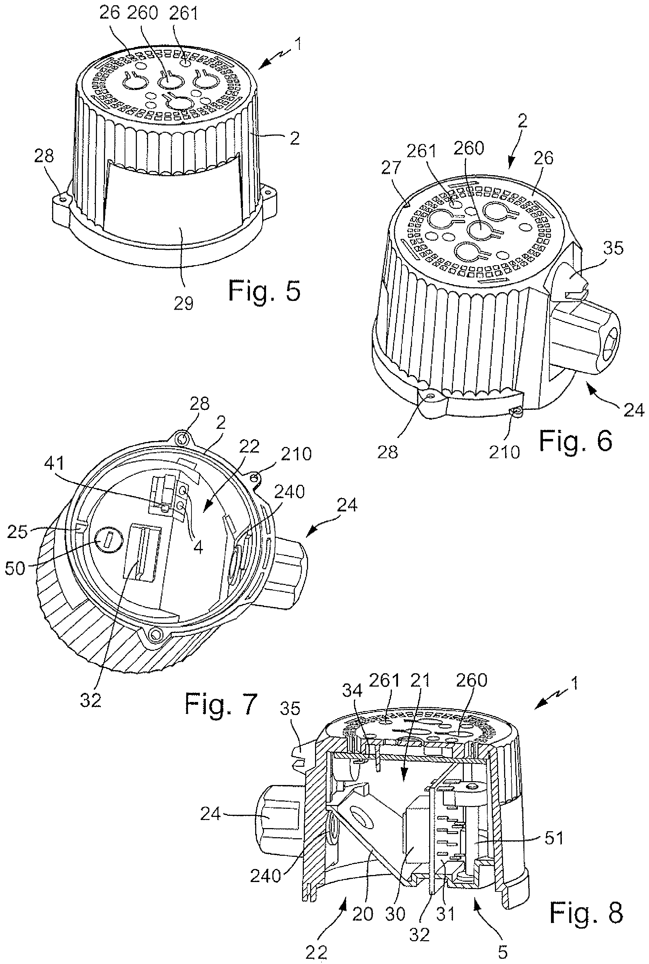

Fig. 5 bis 8 zeigen schematisch ein zweites Ausführungsbeispiel einer Gehäusekappeneinrichtung 1 in einer ersten perspektivischen Seitenansicht, einer zweiten perspektivischen Seitenansicht, einer perspektivischen Ansicht mit Blick auf einen Innenraum und einer Schnittdarstellung. Die Gehäusekappeneinrichtung 1 gemäß den Fig. 5 bis 8 entspricht im Wesentlichen der Gehäusekappeneinrichtung 1 gemäß den Fig. 1 bis 4 und für gleiche oder ähnliche Bauteile werden einheitliche Bezugszeichen verwendet. Auf eine erneute detaillierte Beschreibung dieser Bauteile wird verzichtet.

Bei dem Ausführungsbeispiel gemäß Fig. 5 bis 8 umfasst die Versorgungseinrichtung 3 eine Schaltungsanordnung, welche eine bedarfsabhängige Energieversorgung des Elektromotors ermöglicht. Die Schaltungsanordnung ist in dem dargestellten Ausführungsbeispiel zumindest teilweise auf einer zweiten Platine 34 realisiert. Die Platine 34 ist mit mindestens einem nicht dargestellten Sensor für eine Temperaturerfassung schaltungstechnisch verbunden. An der Gehäusekappe 2 ist dabei eine weitere Tülle 35 für eine Leitung eines Sensors vorgesehen. Zudem ist auf der Platine 34 ein Zeit- oder Taktgeber angeordnet. Die Schaltungsanordnung ist zudem so gestaltet, dass sie einem Nutzer individuelle Einstellungen ermöglicht. Zu diesem Zweck sind an dem Deckel 26 Tastelemente 260 ausgebildet, über welche die Schaltungsanordnung bedienbar ist. Eine gewählte Einstellung ist dem Nutzer signalisierbar. Zu diesem Zweck weist in dem dargestellten Ausführungsbeispiel der Deckel 26 Durchbrüche 261 auf, durch welche optische Signale beispielsweise von Leuchtdioden oder dergleichen anzeigbar sind.

Die Gehäusekappe 2 gemäß den Fig. 5 bis 8 entspricht in ihren äußeren Abmaßen mit Ausnahme der Länge im Wesentlichen der Gehäusekappe 2 gemäß Fig. 1 bis 4. Durch Austausch der Gehäusekappe 2 ist somit eine schnelle Anpassung an geänderte Rahmenbedienungen und/oder ein Aufrüsten bestehender Systeme möglich. Die Gehäusekappe 2 umfasst zusätzlich eine als Öse gestaltete Verliersicherung 210.

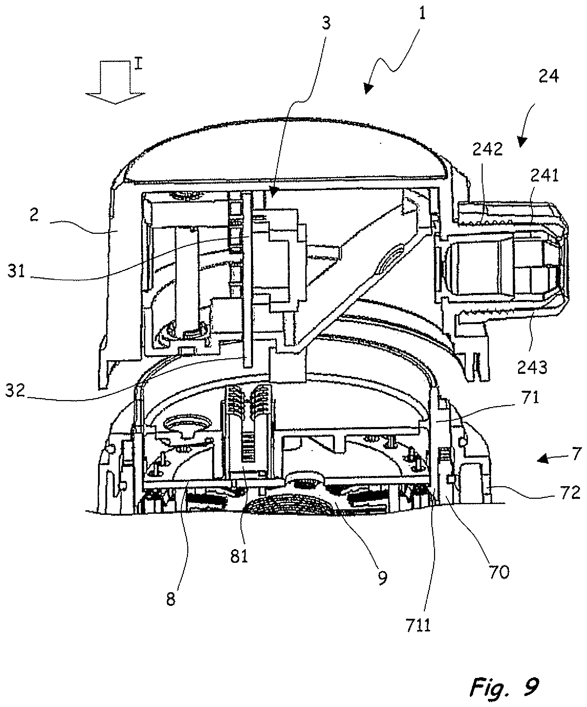

Fig. 9 zeigt schematisch ein weiteres Ausführungsbeispiel, wobei in Fig. 9 eine Gehäusekappeneinrichtung 1 und ein an einem nicht dargestellten Pumpengehäuse anbringbares Grundgehäuse 7 dargestellt sind. Die Gehäusekappeneinrichtung 1 ist ähnlich der Gehäusekappeneinrichtung 1 gemäß den vorangegangen Figuren. Für gleiche Bauteile werden einheitliche Bezugszeichen verwendet.

Das Grundgehäuse 7 ist in dem dargestellten Ausführungsbeispiel mehrteilig und umfasst ein Motorengehäuse 70, einen Einsatz 71 und einen Mantel 72. Ein nur teilweise dargestellter Elektromotor mit einem Stator 9 ist in dem Motorengehäuse 70 angeordnet. Eine Ansteuerung des Elektromotors erfolgt mittels einer Motorsteuerung, welche in dem dargestellten Ausführungsbeispiel auf einer Platine 8 angeordnet ist. Die Platine 8 ist mittels des Einsatzes 71 gelagert. Der Einsatz 71 weist zu diesem Zweck Rastarme 711 auf. Alternativ oder zusätzlich sind in anderen Ausgestaltungen Schraubenkanäle für eine Befestigung mittels Schraubverbindung vorgesehen. Die Platine 8 umfasst eine Kontaktleiste 81, in welche die Kontakte 32 der Platine 31 der Versorgungseinrichtung 3 einsteckbar sind.

Eine Kopplung des Motorengehäuses 70 mit dem Einsatz 71 erfolgt in vorteilhaften Ausgestaltungen über Rastelemente. Der Mantel 72 umgibt das Motorengehäuse 70, sodass eine Abschirmung des nur teilweise dargestellten Elektromotors sichergestellt ist. Das Grundgehäuse 7 ist vorzugsweise mittels einer nicht dargestellten Überwurfmutter mit dem nicht dargestellten Pumpengehäuse verbunden, wie beispielsweise in DE 10 2007 042 186 beschrieben. Zwischen den einzelnen Bauteilen des Grundgehäuses 7 sind Dichtungselemente angeordnet.

Der Mantel 72 und die Gehäusekappe 2 weisen in einer Ausgestaltung jeweils Rastelemente auf, über welche die Gehäusekappe 2 mit dem Mantel 72 und damit mit dem Grundgehäuse 7 verrastbar ist. In anderen Ausgestaltungen sind an der Gehäusekappe 2 wie in den Fig. 1 bis 7 dargestellt seitlich abragende Ösen 28 für eine Schraubverbindung vorgesehen, wobei der Mantel 72 vorzugsweise komplementäre Schraubkanäle aufweist.

Wie in Fig. 9 erkennbar ist, umfasst die Kabeltülle 24 Federelemente 241 und einen Gewindebereich 242. Die Federelemente 241 sind elastisch verformbar. Im Gewindebereich 242 ist eine Befestigungsmutter 243 angebracht, wobei durch Anziehen der Befestigungsmutter 243 eine Klemmung eines nicht dargestellten aufgenommenen Versorgungskabels erfolgt.

Bei der Montage wird zunächst ein Versorgungskabel mit der Gehäusekappe 3 verbunden. Zu diesem Zweck sind - wie in den Fig. 1 bis 8 dargestellt - vorzugsweise Kontaktklemmen vorgesehen. Die derart vormontierte Gehäusekappeneinrichtung 1 wird zur Montage in eine durch einen Pfeil dargestellte Montagerichtung I bewegt. Dabei werden die Kontakte der Platine 31 in die Kontaktleiste 81 eingeführt. Sofern Rastelemente zu Befestigung der Gehäusekappe 2 an dem Grundgehäuse 7 vorgesehen sind, wird durch die Bewegung in Montagerichtung I auch die Gehäusekappe 2 mechanisch mittels der Rastelemente mit dem Grundgehäuse 7 verbunden. In anderen Ausgestaltungen wird die Gehäusekappe 3 mit dem Grundgehäuse 7 verschraubt. In beiden Fällen ist eine einfache Montage ohne aufwendige Verkabelung oder dergleichen möglich.

## Patentansprüche

1. Gehäusekappeneinrichtung für eine Zirkulationspumpe einer Warmwasserversorgung mit einem Grundgehäuse (7) und einem in dem Grundgehäuse (7) gelagerten Elektromotor, die Gehäusekappeneinrichtung (1) umfassend eine Gehäusekappe (2) mit wenigstens einem Verbindungselement für eine Verbindung mit dem Grundgehäuse (7) und eine in der Gehäusekappe (2) angeordnete Versorgungseinrichtung (3) für den Elektromotor, wobei wenigstens eine in einem Innenraum der Gehäusekappe (2) angeordnete Trennwand (20) vorgesehen ist, welche den Innenraum der Gehäusekappe (2) in einen abgeschlossenen Aufnahmeraum (21) mit einer Befestigungseinrichtung, die die Versorgungseinrichtung (3) aufnimmt, und einen Anschlussraum (22) mit wenigstens einer mit der Versorgungseinrichtung (3) verbundenen Anschlusseinrichtung für eine Versorgungsleitung unterteilt, **dadurch gekennzeichnet, dass** die Versorgungseinrichtung (3) eine in dem Aufnahmeraum gelagerte Platine (31) aufweist, wobei die Platine (31) die wenigstens eine Trennwand (20) durchdringt und in dem Anschlussraum (22) angeordnete Kontaktelemente zur elektrischen Verbindung mit dem Elektromotor aufweist, wobei die Versorgungseinrichtung (3) mit wenigstens einem besagten in dem Anschlussraum (22) angeordneten Kontaktelement zur elektrischen Verbindung mit dem Elektromotor wirkverbunden ist.

2. Gehäusekappeneinrichtung nach Anspruch 1, **dadurch gekennzeichnet, dass** die Kontaktelemente als Steckkontakt oder Buchse für eine elektrische Steckverbindung mit dem Elektromotor ausgebildet sind.

3. Gehäusekappeneinrichtung nach Anspruch 1 oder 2, **dadurch gekennzeichnet, dass** die wenigstens eine Trennwand (20) wenigstens abschnittsweise schräg zu einer dem Grundgehäuse (7) zugewandten Stirnseite der Gehäusekappe (2) angeordnet ist.

4. Gehäusekappeneinrichtung nach Anspruch 1, 2 oder 3, **dadurch gekennzeichnet, dass** die Gehäusekappe (2) an einer an den Anschlussraum (21) angrenzenden Wandung mindestens eine Kabeltülle (24) für die Versorgungsleitung aufweist.

5. Gehäusekappeneinrichtung nach Anspruch 4, **dadurch gekennzeichnet, dass** die Kabeltülle (24) wenigstens ein Federelement (241) für eine Kabelklemmung und einen Gewindebereich (242) für eine Befestigungsmutter (243) aufweist.

6. Gehäusekappeneinrichtung nach einem der Ansprüche 1 bis 5, **dadurch gekennzeichnet, dass** die wenigstens eine Anschlusseinrichtung für die Versorgungseinrichtung (3) als Kontaktklemme (4) gestaltetet ist.

7. Gehäusekappeneinrichtung nach Anspruch 6, **dadurch gekennzeichnet, dass** die Kontaktklemme (4) als Federklemme gestaltet ist und mindestens einen zum Öffnen entgegen einer Kraft einer Rückstellfeder bewegbaren Hebel (40) aufweist.

8. Gehäusekappeneinrichtung nach einem der Ansprüche 1 bis 7, **dadurch gekennzeichnet, dass** die Versorgungseinrichtung (3) eine Trimmeinrichtung (5) zur Einstellung einer abgegebenen Versorgungsspannung umfasst, wobei die Trimmeinrichtung (5) vorzugsweise über den Anschlussraum (22) für eine Betätigung zugänglich ist.

9. Gehäusekappeneinrichtung nach einem der Ansprüche 1 bis 8, **dadurch gekennzeichnet, dass** die Versorgungseinrichtung (3) eine Schaltungsanordnung zur bedarfsabhängigen Energieversorgung des Elektromotors umfasst.

10. Gehäusekappeneinrichtung nach Anspruch 9, **dadurch gekennzeichnet, dass** an der Gehäusekappe (2), vorzugsweise im Bereich eines Deckels (26), Tastelemente (260) zur Betätigung der Schaltungsanordnung vorgesehen sind.

11. Gehäusekappeneinrichtung nach einem der Ansprüche 1 bis 10, **dadurch gekennzeichnet, dass** die Gehäusekappe (2) mindestens einen Durchlass für ein optisches Signal, insbesondere einen Durchbruch (261) und/oder einen transparenten Abschnitt, aufweist.

12. Gehäusekappeneinrichtung nach einem der Ansprüche 1 bis 11, **dadurch gekennzeichnet, dass** das wenigstens eine Verbindungselement für eine zerstörungsfrei lösbare Verbindung mit dem Grundgehäuse (7), insbesondere als Schraub- und/oder Rastverbindungselement, gestaltet ist.

13. Gehäuse für eine Zirkulationspumpe umfassend eine Gehäusekappeneinrichtung (1) nach einem der Ansprüche 1 bis 12 und mindestens ein erstes, an einem Pumpengehäuse anbringbares Grundgehäuse (7), in welchem ein Elektromotor der Zirkulationspumpe aufnehmbar ist, wobei das Grundgehäuse (7) und die Gehäusekappe (2) zueinander komplementäre Kopplungselemente aufweisen, durch welche die Versorgungseinrichtung (3) mit dem Elektromotor elektrisch koppelbar ist.

## Claims

1. A housing capping device for a circulation pump of a warm water supply with a main housing (7) and with an electric motor which is mounted in the main housing (7), said housing capping device (2) comprising a housing cap (2) with at least one connection element for a connection to the main housing (7), and a supply device (3) for the electric motor, said supply device being arranged in the housing cap (2), wherein at least one separating wall (20) which is arranged in an interior of the housing cap (2) is provided, said separating wall dividing the interior of the housing cap (2) into a closed-off receiving spec (21) with a fastening device which receives the supply device (3) and into a coupling space (22) with at least one coupling device which is for a supply lead and which is connected to the supply device (3), **characterised in that** the supply device (3) comprises a circuit board (31) which is mounted in the receiving space, wherein the circuit board (31) penetrates the at least one separating wall (20) and comprises contact elements for the electric connection to the electric motor, said contact elements being arranged in the coupling space (22), wherein the supply device (3) is actively connected to at least one said contact element for the electric connection to the motor, said contact element being arranged in the coupling space (22).

2. A housing capping device according to claim 1, **characterised in that** the contact elements are designed as a plug-in contact or socket for an electric plug-in connection to the electric motor.

3. A housing capping device according to claim 1 or 2, **characterised in that** the at least one separating wall (20) at least in sections is arranged obliquely to a face side of the housing cap (2) which faces the main housing (7).

4. A housing capping device according to claim 1, 2 or 3, **characterised in that** the housing cap (2) on a wall which is adjacent to the coupling space (21) comprises at least one cable bush (24) for the supply lead.

5. A housing capping device according to claim 4, **characterised in that** the cable bush (24) comprises at least one spring element (241) for a cable clamp and a threaded region (242) for a fastening nut (243).

6. A housing capping device according to one of the claims 1 to 5, **characterised in that** the at least one coupling device for the supply device (3) is designed as a contact terminal (4).

7. A housing capping device according to claim 6, **characterised in that** the contact terminal (4) is designed as a spring terminal and comprises at least one lever (40) which is movable counter to the force of a restoring spring for opening.

8. A housing capping device according to one of the claims 1 to 7, **characterised in that** the supply device (3) comprises a trimming device (5) for setting a delivered supply voltage, wherein the trimming device (5) is preferably accessible for an actuation via the coupling space (22).

9. A housing capping device according to one of the claims 1 to 8, **characterised in that** the supply device (3) comprises a circuit arrangement for the energy supply of the electric motor in accordance with requirements.

10. A housing capping device according to claim 9, **characterised in that** key elements (260) for actuating the circuit arrangement are provided on the housing cap (2), preferably in the region of a cover (26).

11. A housing capping device according to one of the claims 1 to 10, **characterised in that** the housing cap (2) comprises at least one let-through for an optical signal, in particular an opening (261) and/or a transparent section.

12. A housing capping device according to one of the claims 1 to 11, **characterised in that** the at least one connection element is designed for the destruction-free releasable connection to the main housing (7), in particular as a screw connection element and/or latching connection element.

13. A housing for a circulation pump comprising a housing capping device (1) according to one of the claims 1 to 12 and at least one first main housing (7) which can be attached to a pump housing and in which an electric motor of the circulation pump can be received, wherein the main housing (7) and the housing cap (2) comprise coupling elements which are complementary to one another and by way of which the supply device (3) can be electrically coupled to the electric motor.

## Revendications

1. Dispositif à couvercle de boîtier pour une pompe à circulation d'une alimentation en eau chaude, comprenant un boîtier de base (7) et un moteur électrique logé dans le boîtier de base (7), le dispositif à couvercle de boîtier (1) comprenant un couvercle de boîtier (2) avec au moins un élément de liaison pour une liaison au boîtier de base (7) et un dispositif d'alimentation (3) pour le moteur électrique, disposé dans le couvercle de boîtier (2), au moins une paroi de séparation (20), montée dans l'espace intérieur du couvercle de boîtier, étant prévue qui divise l'espace intérieur du couvercle de boîtier (2) en un espace de réception (21) fermé pourvu d'un dispositif de fixation qui reçoit le dispositif d'alimentation (3), et un espace de raccordement (22) pourvu d'au moins un dispositif de raccordement pour un câble d'alimentation, relié au dispositif d'alimentation (3), **caractérisé en ce que** le dispositif d'alimentation (3) comprend une platine (31) logée dans l'espace de réception, la platine (31) traversant ladite au moins une paroi de séparation (20) et comprenant des éléments de contact disposés dans l'espace de raccordement (22), pour une liaison électrique avec le moteur électrique, le dispositif d'alimentation (3) étant relié en fonctionnement à au moins un desdits éléments de contact, disposé dans l'espace de raccordement (22), pour une liaison électrique avec le moteur électrique.

2. Dispositif à couvercle de boîtier selon la revendication 1, **caractérisé en ce que** les éléments de contact sont configurés comme fiche de contact ou connecteur femelle pour un raccordement électrique par enfichage au moteur électrique.

3. Dispositif à couvercle de boîtier selon la revendication 1 ou 2, **caractérisé en ce que** ladite au moins une paroi de séparation (20) est disposée, au moins par sections, de manière oblique par rapport au côté frontal du couvercle de boîtier (2) en regard du boîtier de base (7).

4. Dispositif à couvercle de boîtier selon l'une des revendications 1, 2 ou 3, **caractérisé en ce que** le couvercle de boîtier (2) comprend, à une paroi contigüe à un espace de réception (21), au moins un passe-câble en caoutchouc (24) pour le câble d'alimentation.

5. Dispositif à couvercle de boîtier selon la revendication 4, **caractérisé en ce que** le passe-câble (24) comprend au moins un élément à ressort (241) pour une fixation de câble et une zone à filetage (242) pour un écrou de fixation (243).

6. Dispositif à couvercle de boîtier selon l'une des revendications 1 à 5, **caractérisé en ce que** ledit au moins un dispositif de raccordement pour le dispositif d'alimentation (3) est formé comme borne de contact (4).

7. Dispositif à couvercle de boîtier selon la revendication 6, **caractérisé en ce que** la borne de contact (4) est formée comme fixation à ressort et comprend au moins un levier (40) mobile à l'encontre d'une force d'un ressort de rappel.

8. Dispositif à couvercle de boîtier selon l'une des revendications 1 à 7, **caractérisé en ce que** le dispositif d'alimentation (3) comprend un dispositif de réglage (5) pour le réglage d'une tension d'alimentation fournie, le dispositif de réglage (5) étant de préférence accessible par l'espace de raccordement (22) pour un actionnement.

9. Dispositif à couvercle de boîtier selon l'une des revendications 1 à 8, **caractérisé en ce que** le dispositif d'alimentation (3) comprend un agencement de circuit pour l'alimentation en énergie du moteur électrique selon les besoins.

10. Dispositif à couvercle de boîtier selon la revendication 9, **caractérisé en ce que**, au couvercle de boîtier (2), des éléments poussoirs (260) sont prévus, de préférence dans la zone d'un couvercle (26), pour l'actionnement de l'agencement de circuit.

11. Dispositif à couvercle de boîtier selon l'une des revendications 1 à 10, **caractérisé en ce que** le couvercle de boîtier (2) comprend au moins un passage pour un signal optique, en particulier une ouverture (261) et/ou une section transparente.

12. Dispositif à couvercle de boîtier selon l'une des revendications 1 à 11, **caractérisé en ce que** ledit au moins un élément de liaison est formé pour une liaison détachable non destructive avec le boîtier de base (7), en particulier comme élément de liaison à visser et/ou à encliqueter.

13. Boîtier pour une pompe à circulation, comprenant un dispositif à couvercle de boîtier (1) selon l'une des revendications 1 à 12 et au moins un premier boîtier de base (7) adapté pour pouvoir être monté sur un boîtier de pompe dans lequel un moteur électrique de la pompe à circulation peut être logé, le boîtier de base (7) et le couvercle de boîtier (2) comprenant des éléments d'accouplement complémentaires par lesquels le dispositif d'alimentation (3) peut être accouplé électriquement au moteur électrique.
